(19) Europäisches Patentamt
European Patent Office
Office européen des brevets

(11) **EP 1 325 982 B1**

(12) **FASCICULE DE BREVET EUROPEEN**

(45) Date de publication et mention
de la délivrance du brevet:
**14.02.2007 Bulletin 2007/07**

(51) Int Cl.:
***D21H 27/40*** *(2006.01)* ***B31F 1/07*** *(2006.01)*

(21) Numéro de dépôt: **01403377.3**

(22) Date de dépôt: **27.12.2001**

(54) **Feuille de papier gaufrée**

Geprägte Papierbahn

Embossed paper sheet

(84) Etats contractants désignés:
**AT BE CH CY DE DK ES FI FR GB GR IE IT LI LU MC NL PT SE TR**

(43) Date de publication de la demande:
**09.07.2003 Bulletin 2003/28**

(73) Titulaire: **Georgia-Pacific France
68320 Kunheim (FR)**

(72) Inventeurs:
• **Basler, Michel
68000 Colmar (FR)**
• **Hoeft, Benoît
68320 Kunheim (FR)**

• **Graff, Pierre
68600 Wolfgantzen (FR)**
• **Jeannot, Sébastien
68000 Colmar (FR)**

(74) Mandataire: **David, Daniel
Cabinet Bloch & Associés
2, square de l'Avenue du Bois
75116 Paris (FR)**

(56) Documents cités:
**EP-A- 0 426 548    EP-A- 0 796 728
WO-A-97/27365    BE-A- 841 455
US-A- 3 414 459    US-A- 3 867 225**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention se rapporte au domaine des papiers absorbants à usage sanitaire ou domestique. Elle vise notamment une feuille constituée d'au moins deux plis gaufrés d'ouate de cellulose, pour une application comme papier toilette, mouchoir ou autres produits équivalents.

Dans ce domaine, l'ouate de cellulose désigne un papier absorbant de faible grammage, de 10 à 40 $g/m^2$. Il est généralement crêpé. La feuille peut être simple, dans ce cas désignée par le terme « pli ». Elle peut être constituée de deux ou plusieurs plis, pour former une feuille double, triple ou multiple selon le nombre de plis.

On profite de la capacité d'allongement de la structure conférée par le crêpage pour déformer la feuille et lui donner de l'épaisseur. Cette opération a un effet aussi sur les caractéristiques de résistance mécanique de la feuille. Elle améliore notamment sa douceur et son moelleux.

On procède à la déformation soit sur du papier à fort taux d'humidité, c'est-à-dire en partie humide de la machine à papier, soit sur du papier à faible taux d'humidité, c'est-à-dire, après que la feuille a été fabriquée et séchée, en transformation. La présente invention concerne la déformation du papier en partie sèche, déformation que l'on appellera gaufrage dans la suite de ce texte.

De façon classique, la feuille est gaufrée par le passage entre un cylindre à surface rigide et un cylindre réalisé en un matériau, par exemple en caoutchouc, qui se déforme lorsqu'il est comprimé sur la surface rigide. Sur cette dernière, on a façonné des picots selon le motif que l'on désire reproduire sur la feuille de papier. Les techniques de gravure des cylindres sont bien connues.

Les motifs de gaufrage sont constitués le plus souvent d'une répétition de picots élémentaires de faible section transversale et de forme géométrique simple. Les picots ont ainsi une forme générale tronconique à base circulaire ou ovale. Ils peuvent être aussi en tronc de pyramide à base polygonale. Aux picots sur le cylindre gaufreur, correspondent sur la feuille après gaufrage, des protubérances sur une face et des cavités sur l'autre face. En sortie de machine de gaufrage, les protubérances ont sensiblement le même contour que les picots. La hauteur des protubérances dépend quant à elle de la pression de gaufrage et de la pénétration plus ou moins grande du caoutchouc dans la gravure du cylindre gaufreur.

On détermine une fréquence de répartition des protubérances plus ou moins élevée et une hauteur plus ou moins grande en fonction de l'usage auquel on destine le produit. On observe que la taille des picots est en fonction inverse de la fréquence de répartition. Pour une feuille dont on cherche à optimiser la capacité d'absorption, et destinée à l'essuyage comme essuie-tout ménager par exemple, le nombre de protubérances est compris entre 5 et 20 par $cm^2$, et leur hauteur peut aller jusqu'à 2 mm. Leur sommet est dans ce cas relativement large.

La Demanderesse a développé, pour du papier toilette notamment, des motifs dont le nombre d'éléments est supérieur, allant de 30 à 80 picots par $cm^2$. Les picots sont alors de plus faible hauteur et ont une surface élémentaire au sommet également beaucoup plus faible. Elle est inférieure à 1 $mm^2$. Un exemple de réalisation d'une feuille, à deux plis, est montré dans le brevet EP 426 548. Ce type de gaufrage que l'on désigne par micro-gaufrage, concerne principalement les caractéristiques liées à l'épaisseur de la feuille. En effet, on sait qu'un gaufrage dont la densité de picots est relativement élevée, avec une faible hauteur de picots, présente une bonne résistance à l'écrasement et paraît épaisse quand on la manipule. Un motif de gaufrage moins dense pour une même hauteur de protubérance ne donne pas la même impression d'épaisseur.

C'est le cas des motifs avec des picots de forme plus complexe et dont l'espacement entre eux est plus important que dans le cas de picots tronconiques. Le sommet de tels picots a une forme allongée, dite linéaire.

La Demanderesse a développé une structure à gaufrage mixte, voir WO 97/27365, composée de deux plis d'ouate de cellulose de grammage compris entre 10 et 40 $g/m^2$. Les deux plis sont gaufrés selon des motifs différents, et les protubérances sont disposées vers l'intérieur de la feuille de manière à ménager entre elles des cavités. Un premier pli est gaufré selon un premier motif composé d'éléments de motifs relativement espacés les uns des autres et formés de premières protubérances à sommets de forme allongée.

Le second pli est gaufré selon un second motif de 30 protubérances par $cm^2$, de faible section transversale.

En particulier, les éléments de motif du premier motif sont inscrits individuellement dans un polygone de surface allant de 2 à 6 $cm^2$ et leur nombre est inférieur à 2000 par $cm^2$.

Les motifs de grande taille de cette réalisation donnent un aspect particulièrement attrayant à la feuille. Ils présentent cependant l'inconvénient de concentrer le collage sur ces zones. On risque donc d'obtenir un produit dont la tenue en main n'est pas homogène.

La demanderesse a souhaité développer une structure dont les motifs externes sont constitués de protubérances tronconiques ; afin d'obtenir un produit dont la tenue en main est homogène. Par ailleurs, ce type de protubérances permet d'obtenir une très grande variété de motifs sur le plan esthétique. La demanderesse a cependant constaté que, si on utilisait pour le gaufrage du premier pli des picots tronconiques quelconques, on obtenait un produit avec un effet d'envers. Par effet d'envers, on entend la formation d'une bosse sur la face extérieure du second pli. Cette bosse affecte la douceur à la surface de la feuille et lui donne un toucher rugueux.

La demanderesse a développé un procédé, couvert par la demande FR 00 06108, qui permet notamment d'améliorer la visibilité du produit en gaufrant davantage le pli extérieur tout en maintenant un niveau de résistance satisfaisant, puisque le pli intérieur n'est pas gaufré. Cependant, lorsque les motifs sont constitués de protubérances sous forme d'éléments discrets (et non de lignes continues par exemple) l'effet d'envers est alors particulièrement marqué puisque le pli intérieur est lisse.

Le brevet BE 841 455 décrit une feuille composée de deux plis différents dans le but d'éviter qu'ils ne s'imbriquent.

Le brevet US 3867225 décrit une feuille composée de deux plis gaufrés dont les protubérances d'un pli s'intercalent entre les protubérances de l'autre pli.

La présente invention a donc comme objet un produit du type décrit précédemment qui ne présente notamment pas d'effet d'envers sur le second pli.

Conformément à l'invention, une feuille d'au moins deux plis, un premier pli et un deuxième pli d'ouate de cellulose de grammage compris entre 10 et 40 g/m$^2$, gaufrés et assemblés de telle façon que les protubérances définissant les motifs de gaufrage sont disposées vers l'intérieur de la feuille et ménagent entre elles des cavités, est caractérisée par le fait que le premier pli comprend des premières protubérances tronconiques de section circulaire ou ovale dont la surface au sommet est comprise entre 0,3 mm$^2$ et 4 mm$^2$, le deuxième pli comprend des deuxièmes protubérances placées en face des premières protubérances de telle sorte que lesdites premières protubérances ne puissent s'intercaler entre les deuxièmes protubérances.

Le fait d'utiliser des motifs complémentaires, tels que les protubérances d'un premier pli qui ne puissent s'intercaler (sur le produit final) entre les protubérances d'un microgaufrage d'un deuxième pli permet de limiter l'effet d'envers du produit.

On a constaté avec surprise que si les protubérances du premier pli venaient au contact du second pli par l'intermédiaire des protubérances de ce dernier, l'effet d'envers était significativement diminué voire éliminé.

En outre, une telle structure peut également permettre d'améliorer la visibilité du motif de gaufrage du premier pli. En effet, dans le cas d'un micro-gaufrage, dont l'une des fonctions essentielles est d'augmenter l'épaisseur du produit, se situant au niveau du deuxième pli, il n'est alors plus nécessaire de noyer le motif de gaufrage du premier pli dans du microgaufrage ; par conséquent les premières protubérances peuvent être mises en valeur sur le plan visuel.

Avantageusement, le premier pli est en contact direct avec le second pli.

Préférentiellement, la surface au sommet des premières protubérances est comprise entre 0,5 mm$^2$ et 2 mm$^2$.

En particulier la surface au sommet des deuxièmes protubérances est comprise entre 0,03 et 1,2 mm$^2$, notamment entre 0,10 et 0,8 mm$^2$.

La feuille selon l'un quelconque des modes de réalisation précédents, est caractérisée par le fait que les deuxièmes protubérances présentent une densité supérieure à 30 protubérances par cm$^2$, de préférence supérieure à 40 protubérances par cm$^2$.

La feuille selon un autre mode de réalisation de l'invention, est caractérisée en ce que le premier pli comprend en outre des deuxièmes protubérances du type de celles du deuxième pli.

Dans ce cas particulier où les protubérances des deux plis sont tronconiques à base circulaire, on peut définir une relation entre les pas du microgaufrage du pli intérieur et les diamètres des deux types de protubérances. Cette relation garantit que les premières protubérances du premier pli ne puissent s'intercaler entre les deuxièmes protubérances du deuxième pli quelle que soit la façon dont les plis sont mis en correspondance.

Ainsi la feuille selon l'un des modes de réalisation de l'invention, est caractérisée en ce que les protubérances des deux plis sont tronconiques à base circulaire et répondent à l'inéquation suivante :

$$D > (Psm^2 + Pst^2)/Pmax - d$$

où D est le diamètre au sommet des plus petites premières protubérances du premier pli

d est le diamètre au sommet des protubérances du microgaufrage du deuxième pli

Psm est le pas sens marche du microgaufrage du deuxième pli

Pst est le pas sens travers du microgaufrage du deuxième pli

Pmax représente le plus grand des pas entre Psm et Pst.

Selon un autre mode de réalisation, la feuille est caractérisée par le fait que l'un des premier et deuxième plis est un pli de fabrication conventionnelle (CWP) et en ce qu'un autre pli est un pli issu d'une fabrication par soufflage d'air traversant (TAD).

L'invention porte également sur le procédé de gaufrage associé permettant notamment d'obtenir une feuille présentant les caractéristiques énoncées ci-dessus.

Le procédé de gaufrage et d'assemblage d'une feuille est caractérisé par le fait qu'il comprend les étapes suivantes : a) gaufrage d'un premier pli sur un premier cylindre de gaufrage comprenant des premiers picots de section transversale circulaire ou ovale de hauteur comprise entre 0,4 mm et 2mm, et de surface au sommet comprise entre 0,3 mm$^2$ et 4 mm$^2$ ; b) gaufrage d'un deuxième pli sur un deuxième cylindre de gaufrage comprenant des picots de hauteur comprise entre 0,3 et 1 mm, de surface au sommet comprise entre 0,03 mm$^2$ et 1,2 mm$^2$ et dont la répartition est telle que lesdits premiers picots ne peuvent s'intercaler entre les deuxièmes picots ; c) assemblage des plis avec disposition des premiers picots sur les deuxièmes picots tels que définis à l'étape b).

Selon un autre mode de réalisation, le procédé de gaufrage et d'assemblage d'une feuille est caractérisé par le fait qu'il comprend les étapes suivantes : a) gaufrage d'un premier pli sur un premier cylindre de gaufrage comprenant des premiers picots de section transversale circulaire ou ovale de hauteur comprise entre 0,4 mm et 2 mm, et de surface au sommet comprise entre 0,3 mm$^2$ et 4 mm$^2$ ; b) gaufrage d'un second pli sur un deuxième cylindre de gaufrage comprenant des picots de hauteur comprise entre 0,3 et 1 mm, de surface au sommet comprise entre 0,03 mm$^2$ et 1,2 mm$^2$ et dont la répartition est telle que lesdits premiers picots ne peuvent s'intercaler entre les deuxièmes picots ; c) décollage du premier pli de la surface du cylindre, et mise en contact avec le second pli avec application d'un cylindre marieur pour assembler les deux plis.

On décrit ci-après des modes de réalisation de l'invention en regard des dessins annexés sur lesquels :

- la figure 1 représente, de façon schématique, une installation de gaufrage et d'assemblage de deux plis d'ouate de cellulose, de type pointe à pointe,
- la figure 2 représente en coupe une feuille à deux plis, conforme à l'invention, obtenue à l'aide de l'installation de la figure 1,
- la figure 3 représente en coupe une feuille à deux plis de l'art antérieur,
- la figure 4 représente une autre installation de gaufrage et d'assemblage de deux plis d'ouate de cellulose, de type « nested »,
- la figure 5 représente en coupe une autre feuille à deux plis, conforme à l'invention, obtenue à l'aide de l'installation de la figure 4,
- les figures 6a et 6b sont des dessins représentant des exemples de motifs de gaufrage du premier pli selon un mode de réalisation de l'invention,
- la figure 7 est un exemple de disposition des protubérances.

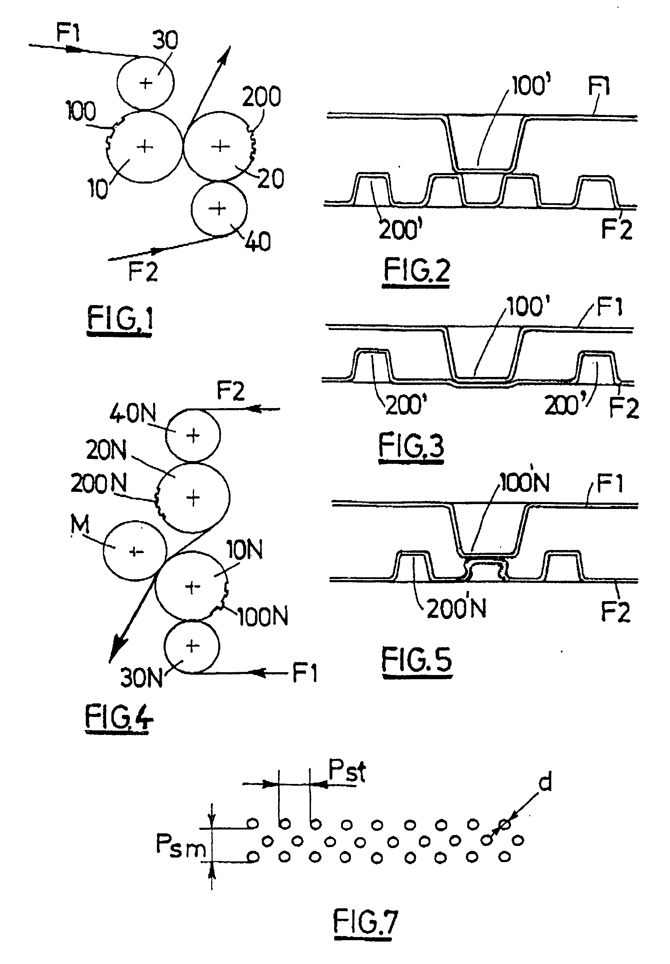

La figure 1 représente une première installation de gaufrage et d'assemblage pointe/pointe de deux plis d'ouate de cellulose pour constituer une feuille double.

Elle comprend une première unité de gaufrage avec un premier cylindre acier 10 coopérant avec un premier cylindre caoutchouc 30, et une deuxième unité de gaufrage avec un second cylindre acier 20 coopérant avec un second cylindre en caoutchouc 40.

Le premier cylindre 10 est gravé selon un motif constitué de premiers picots 100 et le second cylindre 20 est gravé selon un motif constitué des deuxièmes picots 200.

Les deux cylindres 10 et 20 sont parallèles entre eux et roulent sans glissement l'un sur l'autre.

Les premiers picots 100 ont une hauteur comprise entre 0,4 et 2 mm. Leur surface au sommet est choisie entre 0,3 et 4 mm$^2$, mais plutôt entre 0,5 mm$^2$ et 2 mm$^2$. La section transversale des picots est par exemple circulaire mais elle peut aussi être ovale.

Les seconds picots 200 ont une hauteur comprise entre 0,3 et 1 mm. Leur surface au sommet est comprise entre 0,03 mm$^2$ et 1,2 mm$^2$ mais elle peut être comprise de préférence entre 0,10 mm$^2$ et 0,8 mm$^2$. Dans la zone où les deuxièmes picots 200 viennent en contact avec les premiers picots 100 la répartition est au moins de 30 picots pars cm$^2$.

Un premier pli F1 est guidé depuis une bobine mère, non représentée, jusqu'à venir autour du premier cylindre en caoutchouc 30. Elle passe entre l'intervalle de gaufrage ménagé entre les deux cylindres 10 et 30 et épouse le relief du premier cylindre gravé 10 sous la pression du cylindre en caoutchouc 30. Des protubérances 100' sont ainsi formées sur le premier pli. Le grammage dudit premier pli se situe par exemple entre 20 et 23 g/m$^2$.

Un deuxième pli F2 est guidé depuis une bobine mère, non représenté jusqu'à venir autour du second cylindre en caoutchouc 40. Il passe entre l'intervalle de gaufrage ménagé entre les deux cylindres 20 et 40 et épouse le relief du cylindre gravé 20 pour la formation de protubérances 200'. Le grammage dudit deuxième pli peut être compris entre 18 et 21 g/m$^2$.

Les deux plis se rejoignent dans l'intervalle ménagé entre les cylindres 10 et 20. Si on dépose de la colle sur les sommets des protubérances 100' formées sur la première feuille, on associe les deux plis en les mettant en contact dans l'intervalle 10-20. On peut aussi assurer la cohésion des deux plis au moyen d'une installation de moletage en aval de l'intervalle 10-20.

Conformément à l'invention, on définit en outre le motif du second cylindre 20 de gaufrage de telle façon que les protubérances 100' du pli F1 soient toujours supportées par au moins une protubérance 200' du second pli F2 (figure 2).

Si tel n'était pas le cas, et comme représenté sur la figure 3 qui illustre l'art antérieur, la protubérance 100' viendrait au contact direct du deuxième pli entre deux protubérances 200'. Il s'ensuivrait l'apparition d'une bosse sur la surface opposée créant au toucher un effet d'envers.

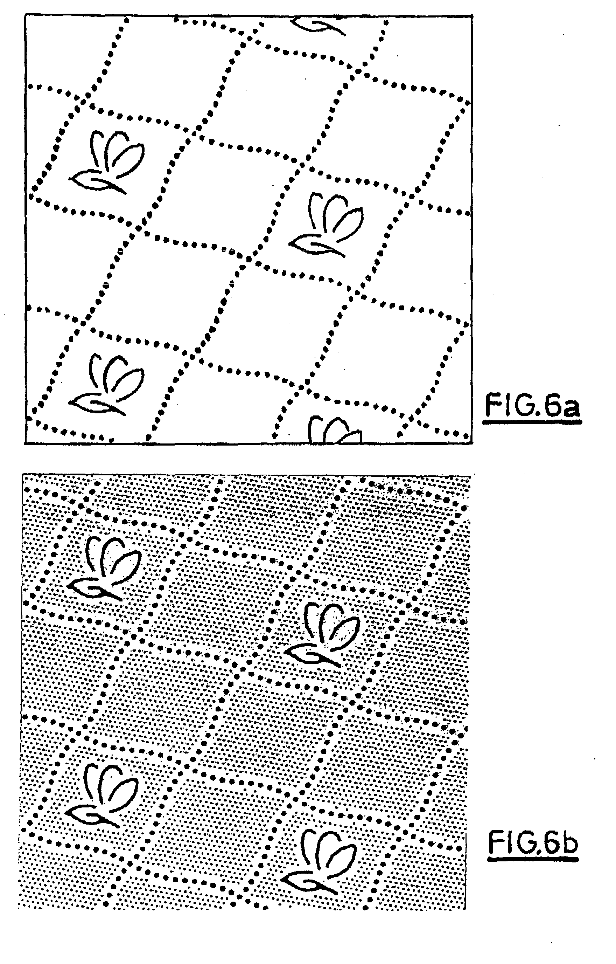

La figure 4 montre de façon très schématique une installation de gaufrage en mode dit « nested ». Une première unité de gaufrage comprend un cylindre gravé 10N et un cylindre en caoutchouc 30N comme précédemment. L'installation comprend aussi une deuxième unité de gaufrage avec un cylindre gravé 20N et un cylindre en caoutchouc 40N. Les deux unités sont placées de telle façon que les cylindres aciers 10N et 20N soient espacés l'un de l'autre. Un cylindre marieur M coopère avec le cylindre 10N pour lier les plis. Un premier pli F1 est gaufré entre les cylindres 30N et 10N. Un second pli F2 est gaufré entre les cylindres 20N et 40N. Le pli F2 se détache du cylindre 20N et vient s'appliquer contre le cylindre M. Le cylindre marieur appuie sur le pli F2. Dans la mesure où l'on a appliqué une pellicule de colle sur les sommets des protubérances 100'N, les deux plis sont liés l'un à l'autre quand on considère le pli en aval du cylindre marieur.

Conformément à l'invention, illustrée par la figure 5, le motif des protubérances 200'N assure que le sommet des protubérances 100'N ne vient pas au contact direct du fond du pli F2 entre les deux protubérances 200'N. Ainsi les protubérances 200'N en contact avec les protubérances 100'N sont partiellement écrasées mais évitent la formation d'une bosse sur le deuxième pli. Sans cette disposition l'effet d'envers serait fortement marqué puisque le cylindre marieur prend appui sur les sommets des protubérances 100'N qui à ce moment sont supportées par le picot 100N de gaufrage.

Selon le mode de réalisation de la figure 6a, le premier pli comprend des protubérances 100' supportées par au moins une protubérance 200' du deuxième pli, et de moindre dimension.

Selon un autre mode de réalisation du produit, le premier pli, illustré par la figure 6b, comprend en plus des premières protubérances, d'autres protubérances du type de celles du second pli, c'est-à-dire de moindre dimension.

Dans l'un ou l'autre procédé, on peut en outre remplacer le collage des plis par le moletage qui est une technique connue de l'homme de l'art.

Par ailleurs, dans le cas de picots à base circulaire, on peut s'assurer à l'aide de l'inéquation ci-dessus que les grosses protubérances du premier pli ne puissent s'intercaler entre les protubérances du microgaufrage du deuxième pli. Pour un type de micro-gaufrage, constitué de protubérances de 0,4 mm de diamètre d réparties selon une densité d'environ 80 picots/cm$^2$, le pas sens marche Psm de ce motif est de l'ordre de 1,4 mm et le pas sens travers Pst de 1,75 mm. On trouve que le diamètre D des protubérances du premier pli doit être supérieur à 1,05 mm. On a représenté sur la figure 7 un exemple de répartition de ces protubérances. Elles sont disposées selon des rangées parallèles entre elles et en quinconce.

On a procédé à un essai comparatif.

On a utilisé un même papier tissu sur la même machine et dans les mêmes conditions opératoires. On a fabriqué deux séries de rouleaux de papier toilette : l'un selon l'art antérieur, l'autre conformément à l'invention.

Dans le premier produit, le second pli, qui se retrouve à l'intérieur quand la feuille est en rouleau, est lisse. Le premier pli, à l'extérieur, est gaufré avec un motif de gaufrage constitué de fleurs, de grosses protubérances tronconiques à section circulaire dont le diamètre est de l'ordre de 1,2 mm et de petits protubérances dont le diamètre est de l'ordre de 0,4 mm et qui sont répartis avec une densité de motif de 80 picots par cm$^2$. Ce motif est représenté sur la figure 6b. Les deux plis sont collés par les gros picots et les fleurs.

Dans le deuxième produit, le pli intérieur est gaufré avec un motif composé uniquement de petites protubérances, de diamètre 0,4 mm et de densité 80 picots/cm$^2$. Le pli extérieur est gaufré avec un motif identique au précédent, hormis le fait que l'on a retiré les petites protubérances. Ce motif est représenté sur la figure 6a.

Le produit est préférentiellement collé au niveau des grosses protubérances et des fleurs.

On constate que les produits obtenus avec les deux procédés ont des caractéristiques similaires, hormis le niveau de douceur qui est supérieur avec le deuxième produit. Cette différence de douceur s'explique par l'effet d'envers atténué dans la solution de l'invention au niveau des grosses protubérances.

La méthode utilisée permet de tester et comparer la douceur de produits standards, des produits nouveaux et des produits concurrents par rapport à un témoin.

Dans le cas où il s'agit de rouleaux de toilette, ceux-ci sont placés dans une boîte « noire » munie de dévidoirs (5 possibilités + un témoin). Le témoin est à gauche.

On enlève environ 30 feuilles par rouleau avant de la placer dans le distributeur (référence comprise).

**Test :**

Chaque testeur compare les échantillons les uns après les autres par rapport au témoin et donne pour chacun un niveau de douceur.

Un contrôleur note sur une feuille récapitulative le classement de chaque échantillon, le testeur étant repéré par une lettre.

La feuille récapitulative comporte 7 catégories d'appréciation.

Un coefficient variant de +3 à -3 a été affecté à chaque catégorie :

  ➢ Pas de différence lorsque la douceur est semblable

  ➢ Probablement plus doux lorsqu'après une courte hésitation une différence positive est perceptible avec le témoin

  ➢ Plus doux lorsque cette différence est sans hésitation

  ➢ Vraiment plus doux lorsque la douceur se démarque de façon évidente

La même appréciation est faite dans le sens opposé pour les produits moins doux.

Après le passage du testeur, les 2 premières feuilles de chaque rouleau sont éliminées.

**Résultats :**

Une note est obtenue par catégorie d'appréciation de douceur en multipliant le nombre de testeurs par le coefficient.

Le résultat s'obtient en divisant le total des notes par le nombre des testeurs.

**Testeurs :**

Il est nécessaire de sélectionner un minimum de 10 personnes ayant une bonne acuité sensorielle.

Ainsi avec l'un de nos produits classiques la douceur a été évaluée à 1,2 tandis qu'avec le nouveau produit objet de la présente demande, cette douceur est de 1,4, ce qui représente une amélioration significative.

**Revendications**

1. Feuille comprenant au moins un premier et un deuxième plis d'ouate de cellulose de grammage compris entre 10 et 40 g/m$^2$, gaufrés et assemblés de telle façon que les protubérances (100', 200' ; 100'N, 200'N) définissant les motifs de gaufrage sont disposées vers l'intérieur de la feuille et ménagent entre elles des cavités, **caractérisée par le fait que** le premier pli (F1) comprend des premières protubérances (100' ; 100'N) tronconiques de section transversale circulaire ou ovale dont la surface au sommet est comprise entre 0,3 mm$^2$ et 4 mm$^2$, le deuxième pli (F2) comprend des deuxièmes protubérances (200' ; 200'N) placées en face des premières protubérances (100' ; 100'N) de telle sorte que lesdites premières protubérances ne puissent s'intercaler entre les deuxièmes protubérances (200' ; 200'N).

2. Feuille selon la revendication précédente, **caractérisée par le fait que** le premier pli (F1) est en contact direct avec le deuxième pli (F2).

3. Feuille selon l'une des revendications précédentes, **caractérisée par le fait que** la surface au sommet des premières protubérances (100' ; 100'N) est comprise entre 0,5 mm$^2$ et 2 mm$^2$.

4. Feuille selon l'une des revendications précédentes, **caractérisée par le fait que** la surface au sommet des deuxièmes protubérances (200' ; 200'N) est comprise entre 0,03 mm$^2$ et 1,2 mm$^2$.

5. Feuille selon la revendication précédente, **caractérisée par le fait que** la surface au sommet des deuxièmes protubérances (200' ; 200'N) est comprise entre 0,10 mm$^2$ et 0,8 mm$^2$.

6. Feuille selon l'une quelconque des revendications précédentes, **caractérisée en ce que** les deuxièmes protubérances (200' ; 200'N) présentent une densité supérieure à 30 protubérances par cm$^2$, de préférence supérieure à 40.

7. Feuille selon l'une quelconque des revendications précédentes, **caractérisée en ce que** le premier pli comprend en outre des deuxièmes protubérances du type de celles du deuxième pli (F2).

8. Feuille selon la revendication 6, **caractérisée en ce que** les protubérances des deux plis sont tronconiques à base circulaire et répondent à l'inéquation suivante :

$$D > (Psm^2 + Pst^2)/Pmax - d$$

où D est le diamètre au sommet des plus petites premières protubérances du premier pli (F1),
d est le diamètre au sommet des protubérances du microgaufrage du deuxième pli (F2),
Psm est le pas sens marche du microgaufrage du deuxième pli (F2),
Pst est le pas sens travers du microgaufrage du deuxième pli (F2),
Pmax représente le plus grand des pas entre Psm et Pst.

9. Feuille selon l'une des revendications précédentes, **caractérisée en ce que** l'un des premier et deuxième plis est un pli de fabrication conventionnelle (CWP) et **en ce qu'**un autre pli est un pli issu d'une fabrication par soufflage d'air traversant (TAD).

10. Procédé de gaufrage et d'assemblage d'une feuille selon l'une quelconque des revendications 1 à 9, ayant au moins un premier et un deuxième plis d'ouate de cellulose, **caractérisé par le fait qu'**il comprend les étapes suivantes :

    a) gaufrage d'un premier pli (F1) sur un premier cylindre (10) de gaufrage comprenant des premiers picots (100) de section transversale circulaire ou ovale, de hauteur comprise entre 0,4 mm et 2 mm, et de surface au sommet comprise entre 0,3 mm$^2$ et 4 mm$^2$ ;
    b) gaufrage d'un deuxième pli (F2) sur un deuxième cylindre (20) de gaufrage comprenant des picots (200) de hauteur comprise entre 0,3 et 1 mm, de surface au sommet comprise entre 0,03 mm$^2$ et 1,2 mm$^2$ et dont la répartition est telle que lesdits premiers picots (100) ne peuvent s'intercaler entre les deuxièmes picots,
    c) Assemblage des plis (F1 et F2) avec disposition des premiers picots (100) sur les deuxièmes picots (200) tels que définis à l'étape b).

11. Procédé de gaufrage et d'assemblage d'une feuille à au moins un premier et un deuxième plis d'ouate de cellulose selon l'une des revendications 1 à 9, **caractérisé par le fait qu'**il comprend les étapes suivantes :

a) gaufrage d'un premier pli (F1) sur un premier cylindre (10N) de gaufrage comprenant des premiers picots (100N) de section transversale circulaire ou ovale, de hauteur comprise entre 0,4 mm et 2 mm, et de surface au sommet comprise entre 0,3 mm$^2$ et 4 mm$^2$.

b) gaufrage d'un second pli (F2) sur un deuxième cylindre (20N) de gaufrage comprenant des picots (200N) de hauteur comprise entre 0,3 et 1 mm, de surface au sommet comprise entre 0,03 mm$^2$ et 1,2 mm$^2$ et dont la répartition est telle que lesdits premiers picots ne peuvent s'intercaler entre les deuxièmes picots,

c) décollage du premier pli de la surface du cylindre, et mise en contact avec le second pli avec application d'un cylindre marieur (M) pour assembler les deux plis (F1 et F2).

12. Procédé selon l'une des revendications 10 et 11, **caractérisé par le fait que** l'on assemble les deux plis (F1 et F2) l'un à l'autre par application de colle sur les sommets des premières protubérances.

13. Procédé selon l'une des revendications 10 et 11, **caractérisé par le fait que** l'on assemble les deux plis (F1 et F2) par moletage.


## Claims

1. A sheet comprising at least a first and a second cellulose wadding ply having a grammage of between 10 and 40 g/m$^2$ and each embossed and joined to the other in a way that the protrusions (100', 200' ; 100'N, 200'N) defining the embossing patterns are directed toward the sheet's inside and provide cavities between them, **characterized in that** the first ply (F1) comprises first frustoconical protrusions (100' ; 100'N) having a circular or oval transversal section of which the area at the top is between 0.3 and 4 mm$^2$, the second ply (F2) comprises second frustoconical protrusions (200' ; 200'N) configured to be facing the first protrusions (100' ; 100'N) in a way that said first protrusions (100' ; 100'N) are precluded from inserting themselves between the second protrusions (200' ; 200'N).

2. Sheet as claimed above, **characterized in that** the first ply (F1) makes direct contact with the second ply (F2).

3. Sheet as claimed in one of the above claims, **characterized in that** the surface at the top of each of the first protrusions (100' ; 100'N) is between 0.5 and 2 mm$^2$.

4. Sheet as claimed in one of the above claims, **characterized in that** the surface at the top of each of the second protrusions (200' ; 200'N) is between 0.03 and 1.2 mm$^2$.

5. Sheet as claimed in the preceding claim, **characterized in that** the surface at each top of the second protrusions (200' ; 200'N) is between 0.10 and 0.8 mm$^2$.

6. Sheet as claimed in any of the above claims, **characterized in that** the second protrusions (200' ; 200'N) are distributed in densities exceeding 30 protrusions/cm$^2$, preferably exceeding 40 protrusion/cm$^2$.

7. Sheet as claimed in any of the above claims, **characterized in that** the first ply furthermore comprises second protrusions of the same kind as those of the second ply (F2).

8. Sheet as claimed in claim 6, **characterized in that** the protrusions of both plies are frustoconical and have a circular base and obey the following inequality :

$$D > (\,[Pad]^2 + [Ptr]^2)/Pmax - d$$

where

D is a diameter at the top of the smallest first protrusions of the first ply (F1),
d is the diameter at the top of the micro-embossing protrusions of the second ply (F2),
Pad is the pitch in the direction of advance of the second ply's (F2) micro-embossing,
Ptr is the pitch in the transverse direction of the second ply's (F2) micro-embossing,
Pmax is the largest of the pitches of Pad and Ptr.

9. Sheet as claimed in one of the above claims, **characterized in that** one of the first and second plies is a conventionally made ply (CWP) and **in that** the other ply is subjected to manufacture including through-air-drying (TAD).

10. A method for embossing and assembling a sheet as claimed in any of claims 1 through 9, said sheet comprising at least one first and second cellulose wadding ply, **characterized in that** this method comprises the following steps :

(a) embossing a first ply (F1) on a first embossing cylinder (10) comprising first embossing tips (100) having a circular or oval transversal section, a height between 0.4 and 2 mm and a surface at the top of each tip of between 0.3 and 4 mm$^2$,

(b) embossing a second ply (F2) on a second embossing cylinder (20) comprising embossing tips (200) having a height between 0.3 and 1 mm and a surface at each top of between 0.03 and 1.2 mm$^2$ and said embossing tips being distributed in a way that said first embossing tips (100) are precluded from being inserted between the second embossing tips,

(c) assembling the plies (F1 and F2) by configuring the first embossing tips (100) on the second embossing tips (200) in the manner defined in stage (b).

11. Method for embossing and assembling a sheet comprising at least a first and second cellulose wadding ply as claimed in one of claims 1 through 9, **characterized by** the following steps :

(a) embossing a first ply (A) on a first embossing cylinder (10N) comprising first embossing tips (100N) having a circular or oval transversal section, a height between 0.4 and 2 mm and each having a surface at the top of between 0.3 and 4 mm$^2$,

(b) embossing a second ply (F2) on a second embossing cylinder (20N) comprising embossing tips (200N) having a height between 0.3 and 1 mm and each having a top surface of between 0.03 and 1.2 mm$^2$, and said embossing tips being distributed in a way that said first embossing tips (200) are precluded from being inserted between the second embossing tips,

(c) detaching the first ply from the cylinder surface and contacting it with the second ply using a joining cylinder (M) joining the two plies (F1 and F2).

12. Method as claimed in either of claims 10 and 11, **characterized in that** the two plies (F1 and F2) are joined to each other by depositing an adhesive on the tops of the first protrusions.

13. Method as claimed in one of claims 10 and 11, **characterized in that** the two plies (F1 and F2) are joined by knurling.

**Patentansprüche**

1. Blatt mit wenigstens einer ersten und einer zweiten Lage aus Zellstoffwatte mit einer flächenbezogenen Masse zwischen 10 und 40 g/m$^2$, die derart geprägt und verbunden sind, daß die Ausstülpungen (100', 200'; 100'N, 200'N), die die Prägungsmuster definieren, in Richtung des Inneren des Blattes angeordnet sind und zwischen einander Hohlräume bilden, **dadurch gekennzeichnet, daß** die erste Lage (F1) erste kegelstumpfförmige Ausstülpungen (100'; 100'N) mit kreisförmigem oder ovalem Querschnitt aufweist, deren Scheitelfläche zwischen 0,3 mm$^2$ und 4 mm$^2$ beträgt, daß die zweite Lage (F2) zweite Ausstülpungen (200'; 200'N) aufweist, die derart gegenüber den ersten Ausstülpungen (100'; 100'N) angeordnet sind, daß die ersten Ausstülpungen sich nicht zwischen die zweiten Ausstülpungen (200'; 200'N) schieben können.

2. Blatt nach dem vorhergehenden Anspruch, **dadurch gekennzeichnet, daß** die erste Lage (F1) im direkten Kontakt mit der zweiten Lage (F2) steht.

3. Blatt nach einem der vorhergehenden Ansprüche, **dadurch gekennzeichnet, daß** die Scheitelfläche der ersten Ausstülpungen (100'; 100'N) zwischen 0,5 mm$^2$ und 2 mm$^2$ beträgt.

4. Blatt nach einem der vorhergehenden Ansprüche, **dadurch gekennzeichnet, daß** die Scheitelfläche der zweiten Ausstülpungen (200'; 200'N) zwischen 0,03 mm$^2$ und 1,2 mm$^2$ beträgt.

5. Blatt nach dem vorhergehenden Anspruch, **dadurch gekennzeichnet, daß** die Scheitelfläche der zweiten Ausstülpungen (200' ; 200'N) zwischen 0,10 mm$^2$ und 0,8 mm$^2$ beträgt.

6. Blatt nach einem der vorhergehenden Ansprüche, **dadurch gekennzeichnet, daß** die zweiten Ausstülpungen (200'; 200'N) eine Dichte oberhalb von 30 Ausstülpungen pro cm$^2$, vorzugsweise oberhalb von 40, aufweisen.

7. Blatt nach einem der vorhergehenden Ansprüche, **dadurch gekennzeichnet, daß** die erste Lage außerdem zweite Ausstülpungen vom Typ derjenigen der zweiten Lage (F2) aufweist.

8. Blatt nach Anspruch 6, **dadurch gekennzeichnet, daß** die Ausstülpungen der beiden Lagen kegelstumpfförmig mit kreisförmiger Grundfläche sind und der folgenden Ungleichung entsprechen:

$$D > (Psm^2 + Pst^2)/Pmax - d$$

wobei D der Scheiteldurchmesser der kleineren ersten Ausstülpungen der ersten Lage (F1) ist, d der Scheiteldurchmesser der Ausstülpungen der Mikroprägung der zweiten Lage (F2) ist, Psm die Schrittweite der Mikroprägung der zweiten Lage (F2) in Laufrichtung ist, Pst die Schrittweite der Mikroprägung der zweiten Lage (F2) in Querrichtung ist,
Pmax die größere der Schrittweiten Psm und Pst ist.

9.  Blatt nach einem der vorhergehenden Ansprüche, **dadurch gekennzeichnet, daß** eine der ersten und zweiten Lage eine Lage aus konventioneller Fertigung (CWP) ist und daß eine andere Lage eine aus einer Fertigung mit Einblasen durchströmender Luft (TAD) stammende Lage ist.

10. Verfahren zur Prägung und zum Verbinden eines Blattes nach einem der vorhergehenden Ansprüche 1 bis 9 mit wenigstens einer ersten und einer zweiten Lage aus Zellstoffwatte, **dadurch gekennzeichnet, daß** es die folgenden Schritte aufweist:

    a) Prägung einer ersten Lage (F1) auf einem ersten Prägezylinder (10) mit ersten Vorsprüngen (100) mit kreisförmigem oder ovalem Querschnitt, einer Höhe zwischen 0,4 mm und 2 mm und einer Scheitelfläche zwischen 0,3 mm$^2$ und 4 mm$^2$,
    b) Prägung einer zweiten Lage (F2) auf einem zweiten Prägezylinder (20) mit Vorsprüngen (200) einer Höhe zwischen 0,3 und 1 mm und einer Scheitelfläche zwischen 0,03 mm$^2$ und 1,2 mm$^2$, die derart verteilt sind, daß sich die ersten Vorsprünge (100) nicht zwischen die zweiten Vorsprünge schieben können,
    c) Verbinden der Lagen (F1) und (F2), wobei die ersten Vorsprünge (100) wie im Schritt b) definiert auf den zweiten Vorsprüngen (200) angeordnet werden.

11. Verfahren zur Prägung und zum Verbinden eines Blattes mit wenigstens einer ersten und einer zweiten Lage Zellstoffwatte nach einem der Ansprüche 1 bis 9, **dadurch gekennzeichnet, daß** es die folgenden Schritte aufweist:

    a) Prägung einer ersten Lage (F1) auf einem ersten Prägezylinder (10N) mit ersten Vorsprüngen (100N) mit kreisförmigem oder ovalem Querschnitt, einer Höhe zwischen 0,4 mm und 2 mm und einer Scheitelfläche zwischen 0,3 mm$^2$ und 4 mm$^2$,
    b) Prägung einer zweiten Lage (F2) auf einem zweiten Prägezylinder (20N) mit Vorsprüngen (200N) einer Höhe zwischen 0,3 und 1 mm und einer Scheitelfläche zwischen 0,03 mm$^2$ und 1,2 mm$^2$, die derart verteilt sind, daß sich die ersten Vorsprünge nicht zwischen die zweiten Vorsprünge schieben können,
    c) Abnehmen der ersten Lage von der Zylinderoberfläche und in Kontaktbringen mit der zweiten Lage durch Einsatz eines Verbindungszylinders (M) zum Verbinden der beiden Lagen (F1 und F2).

12. Verfahren nach einem der Ansprüche 10 und 11, **dadurch gekennzeichnet, daß** man die beiden Lagen (F1 und F2) durch Aufbringen von Klebstoff auf die Scheitelflächen der ersten Vorsprünge verbindet.

13. Verfahren nach einem der Ansprüche 10 und 11, **dadurch gekennzeichnet, daß** man die beiden Lagen (F1 und F2) durch Prägewalzen verbindet.

FIG.1

FIG.2

FIG.3

FIG.4

FIG.5

FIG.7

FIG.6a

FIG.6b